# EUROPEAN PATENT SPECIFICATION

(11) **EP 3 668 015 B1**
(45) Date of publication and mention of the grant of the patent: **14.04.2021**
(21) Application number: 19195709.1
(22) Date of filing: 05.09.2019
(51) Int. Cl.: H04L 12/26, G06F 9/50, G06K 9/00, G06N 3/04

(54) **A MULTI-PROCESSOR NEURAL NETWORK PROCESSING APPARATUS**
VERARBEITUNGSVORRICHTUNG FÜR EIN NEURONALES MEHRPROZESSORNETZ
APPAREIL DE TRAITEMENT DE RÉSEAU NEURONAL MULTIPROCESSEUR

(30) Priority: 11.12.2018 US 201816216802
(43) Date of publication of application: 17.06.2020
(73) Proprietor: FotoNation Limited, H91V0TX Galway (IE)
(72) Inventor: FULOP, Szabolcs, 500152 Brasov (RO); ZAHARIA, Corneliu, 500152 Brasov (RO); BIGIOI, Petronel, Co Galway, H91V0TX (IE)
(74) Representative: Hanna Moore + Curley

(56) References cited:
- EP-A1- 3 346 423
- US-A1- 2016 092 765
- US-A1- 2016 379 352
- US-B1- 9 665 799

## Description

### Field

The present invention relates to a self-test system for a multi-processor neural network processing apparatus.

### Background

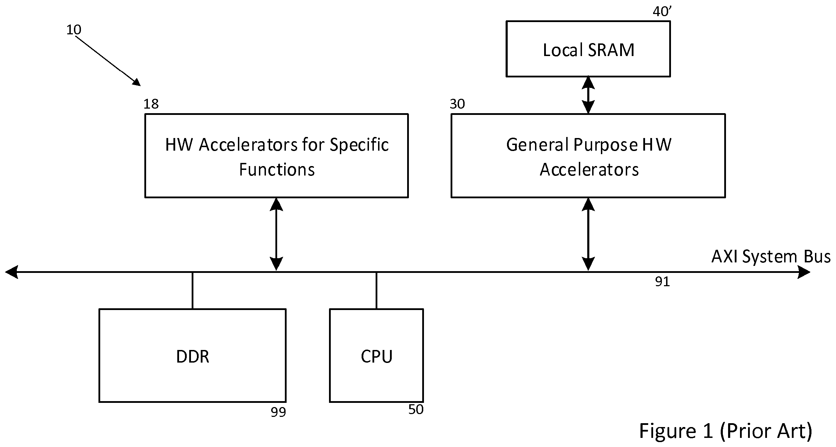

Figure 1 illustrates schematically a typical system architecture for a driver monitoring system (DMS) used in vehicles.

Such systems 10 can contain a host CPU 50, possibly a double/quad core processor and system memory 99, for example, single or multiple channel LPDDR4 memory module, such as disclosed in "Design and Implementation of a Self-Test Concept for an Industrial Multi-Core Microcontroller", Burim Aliu, Masters Thesis, Institut fur Technische Informatik, Technische Universitat Graz, May 2012.

Such systems can further include co-processing modules 18, 30 for accelerating processing and these can comprise: general purpose hardware accelerators 30, such as programable neural network engines or various digital signal processing (DSP) cores, for example, as disclosed in PCT Application WO2019/042703 and "A 16 nm FinFET Heterogeneous Nona-Core SoC Supporting ISO26262 ASIL B Standard", Shibahara et al, IEEE Journal Of Solid-State Circuits, Vol. 52, No. 1, January 2017 respectively; or hardware engines 18 dedicated for specific function acceleration, for example, face detection such as disclosed in PCT Application WO 2017/108222 or image distortion correction such as disclosed in US Patent No. 9,280,810.

US 2016/092765 discloses a performance investigation tool (PIT) for a distributed processing system (DPS) such as those referenced above. Prior to actually deploying the DPS, the PIT operates by first receiving input information that describes at least some characteristics of the task to be executed in a distributed manner by distributed computing units. The PIT then determines, based on the input information, at least one time-based performance measure that describes the performance of at least one DPS that is capable of performing the graph processing task. Upon determination that the time-based performance measure(s) are acceptable, a configuration system may be used to construct the DPS using the plurality of computing units. Using such tools, a program for controlling the execution of neural networks by distributed computing units can be generated.

In operation, both the core processor 50 as well as the general purpose 30 and dedicated specific processors 18 receive information either directly or from memory 99 via the system bus 91 from various sensors disposed around a vehicle in order to control or provide information about the vehicle for example through a driver display (not shown).

Automotive systems are generally required to comply with safety standards such as Automotive Safety Integrity Level (ASIL) A, B, C or D defined in ISO 26262 before being incorporated in a vehicle. ASIL-A is the lowest and ASIL-D is the highest safety level used in the automotive industry.

The first rarely used mechanism for ensuring processing accelerators provide ASIL-D safety is redundancy. Here, multiple processing accelerators would each execute the same function and in the end the results from each processing accelerator would be compared and any difference signalled to a host.

This of course provides high safety coverage but requires a multiple of silicon area and power consumption vis-à-vis a non-redundant implementation.

Another widely used mechanism is a software Built-in Self-Test (BIST). In this case a host CPU can schedule a task at power-up of a processing accelerator or at fixed time periods. This task comprises some software testing of the processing accelerator hardware to be sure that there is no fault in the processing accelerator. The test software should be developed in such a way to offer as much verification coverage as possible. Software BIST can be relatively easy to implement and it can be tuned or re-written at any time. However, it generally provides relatively low coverage (generally used only in ASIL - A) and can affect normal functionality in terms of performance.

On the other hand, hardware BIST involves circuitry enabling a processing accelerator to test itself and to determine whether results are good or bad. This can provide high coverage, but of course involves additional silicon area, with a theoretical limit approaching redundancy as described above.

### Summary

According to the present invention, there is provided a multi-processor neural network processing apparatus according to claim 1.

Embodiments of the present invention are based on one neural network processing engine within a multi-processor neural network processing apparatus which is otherwise free taking a configuration (program) for another processing engine and for a limited period of time, running the same configuration. The results from each engine are compared and if they are not equal, a fault in one or other engine can be readily identified.

After running in a redundant mode, an engine can return to its own designated task.

### Brief Description of the Drawings

An embodiment of the invention will now be described, by way of example, with reference to the accompanying drawings, in which:
Figure 1 shows a typical architecture for a driver monitoring system (DMS);
Figure 2 shows a multi-processor neural network processing apparatus operable according to an embodiment of the present invention;
Figure 3 illustrates Programmable Convolutional Neural Network (PCNN) engines operating in independent mode; and
Figure 4 illustrates PCNN engines operating in redundancy mode.

### Description of the Embodiment

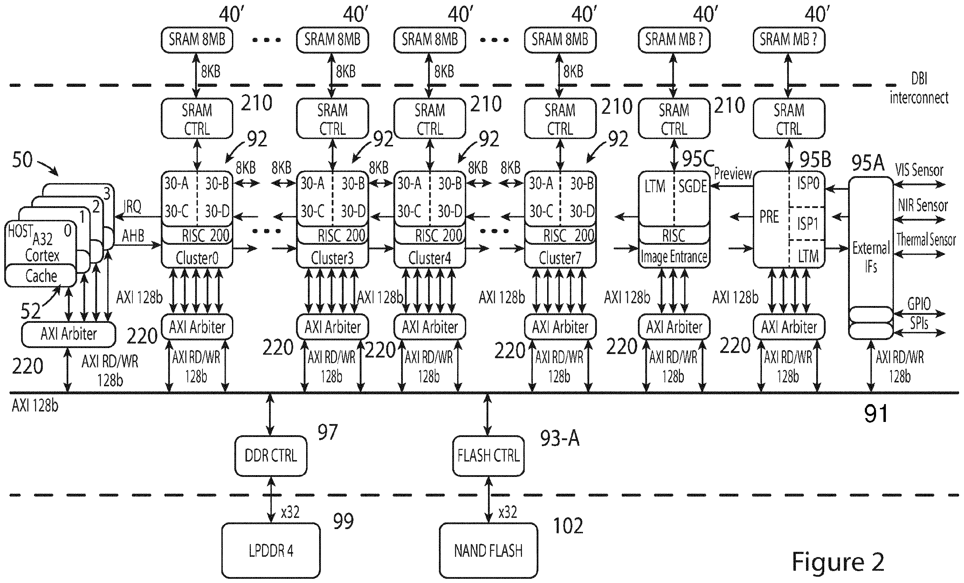

Referring now to Figure 2, there is shown a neural network processing apparatus of the type disclosed in the above referenced PCT Application WO2019/042703.

The apparatus includes a host CPU 50 comprising a bank of processors which can each independently control a number of programmable convolutional neural network (PCNN) clusters 92 through a common internal Advanced High-performance Bus (AHB), with an interrupt request (IRQ) interface used for signalling from the PCNN cluster 92 back to the host CPU 50, typically to indicate completion of processing, so that the host CPU 50 can coordinate the configuration and operation of the PCNN clusters 92.

Each PCNN cluster 92 includes its own CPU 200 which communicates with the host CPU 50 and in this case 4 independently programmable CNNs 30-A...30-D of the type disclosed in PCT Application WO 2017/129325. Note that within the PCNN cluster 92, the individual CNNs 30 do not have to be the same and for example, one or more individual CNNs might have different characteristics than the others. So for example, one CNN may allow a higher number of channels to be combined in a convolution than others and this information would be employed when configuring the PCNN accordingly. In the embodiment, each individual CNN 30-A...30-D, as well as accessing either system memory 99 or 102 across system bus 91 can use a shared memory 40' through which information can be shared with other clusters 92. Thus, the host CPU 50 in conjunction with the cluster CPU 200 and a memory controller 210 arrange for the transfer of initial image information as well as network configuration information from either the memory 99 or 102 into the shared memory 40'. In order to facilitate such transfer, each host CPU 50 can incorporate some cache memory 52.

An external interface block 95A with one or more serial peripheral interfaces (SPIs) enables the host processors 50 to connect to other processors within a vehicle network (not shown) and indeed a wider network environment. Communications between such host processors 50 and external processors can be provided either through the SPIs or through a general purpose input/output (GPIO) interface, possibly a parallel interface, also provided within the block 95A.

In the embodiment, the external interface block 95A also provides a direct connection to various image sensors including: a conventional camera (VIS sensor), a NIR sensitive camera, and a thermal imaging camera for acquiring images from the vehicle environment.

In the embodiment, a dedicated image signal processor (ISP) core 95B includes a pair of pipelines ISP0, ISP1. A local tone mapping (LTM) component within the core 95B can perform basic pre-processing on received images including for example: resampling the images; generating HDR (high dynamic range) images from combinations of successive images acquired from the image acquisition devices; generating histogram information for acquired images - see PCT Application No. PCT/EP2017/062188 for information on producing histogram of gradients; and/or producing any other image feature maps which might be used by PCNN clusters 92 during image processing, for example, Integral Image maps - see PCT Application WO2017/032468 for details of such maps. The processed images/feature maps can then be written to shared memory 40' where they are either immediately or eventually available for subsequent processing by the PCNN clusters 92 as well as or alternatively, providing received pre-processed image information to a further distortion correction core 95C for further processing or writing the pre-processed image information to memory 99 or 102 possibly for access by external processors.

The distortion correction core 95C includes functionality such as described in US Patent No. 9,280,810 for flattening distorted images for example those acquired by wide field of view (WFOV) cameras, such as in-cabin cameras. The core 95C can operate either by reading image information temporarily stored within the core 95B tile-by-tile as described in US Patent No. 9,280,810 or alternatively, distortion correction can be performed while scanning raster image information provided by the core 95B. Again, the core 95C includes an LTM component so that the processing described in relation to the core 95B can also be performed if required on distortion corrected images.

Also note that in common with the PCNN clusters 92, each of the cores 95B and 95C has access to non-volatile storage 102 and memory 99 via a respective arbiter 220 and controller 93-A, 97 and volatile memory 40' through respective SRAM controllers 210.

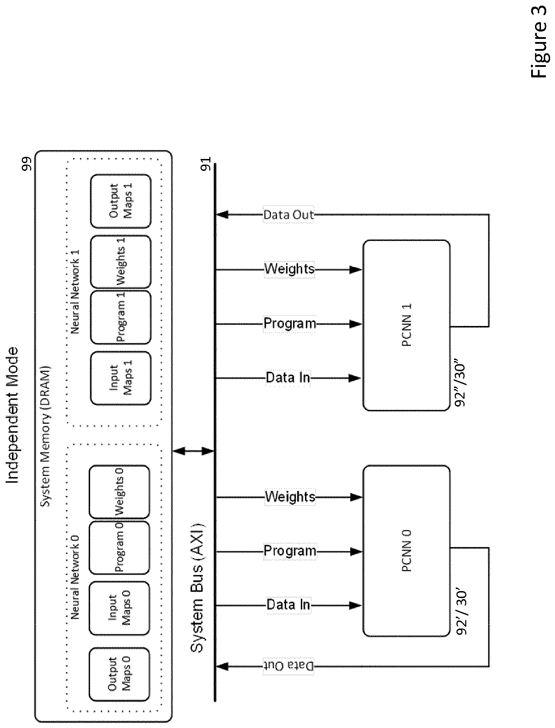

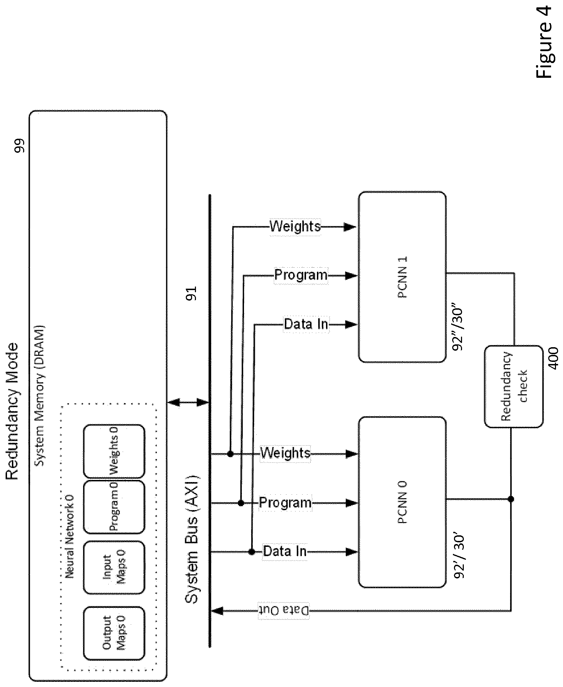

Embodiments of the present invention can be implemented on systems such as shown in Figure 2. In this case, each PCNN cluster 92 or CNN 30 can swap between operating in independent mode, Figure 3, and redundant mode, Figure 4. Embodiments are based on a cluster 92 or an individual CNN 30 being provided with both input images or map(s), as well as the network configuration required to be executed by the CNN i.e. the definitions for each layer of a network and the weights to be employed within the various layers of the network, each time it is to process one or more input images/maps.

Normally, as shown in Figure 3, a first PCNN_0 92'/30' might be required to process one or more input maps_0 through a network defined by program_0 and using weights_0 to produce one or more output maps_0. Note that the output maps_0 can comprise output maps from intermediate layers of the network defined by program_0 or they can include one or more final classifications generated by output nodes of the network defined by program_0. Similarly, a second PCNN_1 92"/30" might be required to process one or more input maps_1 through a network defined by program_1 and using weights_1 to produce one or more output maps_1. (Note that input maps_0 and input maps_1 can be the same or different images/maps or overlapping sets of images/maps.)

As will be appreciated, it may be desirable or necessary to execute different networks at different times and different frequencies. So for example, in a vehicle with one or more front facing cameras, a PCNN cluster 92 or CNN 30 dedicated to identifying pedestrians within the field of view of the camera may be executing at upwards of 30 frames per second, whereas in a vehicle with a driver facing camera, a PCNN cluster 92 or CNN 30 dedicated to identifying driver facial expressions may be executing at well below 30 frames per second. Similarly, some networks may be deeper or more extensive than others and so may involve different processing times even if executed at the same frequency.

Thus, it should be apparent that there will be periods of time when one or more of the multiple PCNN clusters 92 or individual CNNs 30 in a multi-processor neural network processing apparatus such as shown in Figure 2 will be idle.

Embodiments of the present invention are based on at least some of such PCNN clusters 92 or CNNs 30 either under the control of the host CPU 50, independently or via their respective cluster CPUs 200 being able to identify program commands and data for other target PCNNs either in memory 99 or being passed across the system bus 91 (as well as possibly the AHB bus).

In these cases, as illustrated in Figure 4, a PCNN cluster 92" or individual CNNs 30" can switch to operate in a redundant mode, where using the input maps, configuration information/program definition and weights for another target PCNN cluster 92' or CNN 30', they replicate the processing of the target PCNN cluster/CNN.

Each such PCNN cluster 92" or CNN 30" when operating in redundant mode can continue to execute the program for the target PCNN until either processing is completed or the PCNN cluster/CNN receives a command from a host CPU 50 requesting that it execute its own network program in independent mode.

The results of processing, to the extent this has occurred before completion or interruption, can then be compared by either: the cluster CPU 200 in the redundant PCNN cluster 92"; the redundant CNN 30"; the cluster CPU 200 in the target PCNN cluster 92' or CNN 30', if they know that their operation is being shadowed by a redundant PCNN cluster/CNN; or by a host CPU 50, as indicated by the decision box 400.

Using a CPU 200 common to a number of individual CNNs to conduct a redundancy check of either a PCNN cluster 92 or individual CNN 30 removes the burden from the host CPU 50 of identifying opportunities for conducting testing, but also lessens the amount of logic to be implemented vis-à-vis providing such functionality within each individual CNN 30. Similarly, as each CPU 200 in any case provides access for each individual CNN 30 to the system bus 91, it can readily act on their behalf to identify opportunities for conducting testing of other PCNN clusters 92 or individual CNNs 30.

The redundancy check functionality 400 can be implemented in a number of ways. It will be appreciated that during the course of processing a neural network, each layer in a succession of layers will produce one or more output maps. Typically, convolutional and pooling layers produce 2-dimensional output feature maps, whereas fully connected or similar classification layers produce 1-dimensional feature vectors. Typically, the size of output map decreases as network processing progresses until for example, a relatively small number of final classification values might be produced by an final network output layer. Nonetheless, it will be appreciated that other networks for example generative networks or those performing semantic segmentation may in fact produce large output maps. Thus, in particular, if a target PCNN cluster 92' or CNN 30' writes any such output map back to memory 99 during processing, this can be compared with the corresponding map produced by a redundant PCNN cluster 92'" or CNN 30" to determine if there is a difference. For very large output maps, rather than a pixel-by-pixel comparison, a hash, CRC (cyclic redundancy check) or signature can be generated for an output map and these can be compared.

In any case, if the output maps or values derived from such output maps match, then it can be assumed that both the target PCNN cluster 92' or CNN 30' and the redundant PCNN cluster 92"' or CNN 30" are functioning. If not, then at least one of the target or redundant PCNN clusters or CNNs can be flagged as being potentially faulty. Such a potentially faulty PCNN cluster or CNN can subsequently be set to run only in redundant mode until it has an opportunity to be checked against another target PCNN cluster or CNN. If one of the potentially faulty PCNN cluster or CNN checks out against another target PCNN cluster or CNN and the other does not, then that other PCNN cluster or CNN can be designated as faulty and disabled permanently. (The remaining potentially faulty PCNN cluster or CNN may need to run successfully in redundant mode a given number of times before it is undesignated as potentially faulty.)

It will be appreciated from the above description that multiple CNNs 30, whether within a single PCNN cluster 92 or spread across a number of PCNN clusters 92 especially lend themselves to this opportunistic testing because it is not essential that such CNNs complete the processing of an entire network for a fault analysis to be made. Indeed, it can be the case, that typically larger output maps from processing of earlier layers of a network can provide a more extensive test result of functionality within a PCNN cluster or individual CNN than what might be a single final classification from a network. On the other hand, writing too much of such intermediate layer information back across a system bus 91 to memory 99 rather than maintaining such information in a local cache only may unduly consume system resources. As such, network program configuration can be balanced between consuming only a minimum of system resources and providing sufficient intermediate layer output information that redundancy checking can be performed without a redundant PCNN cluster 92" or CNN 30" necessarily completing processing of a network during its otherwise idle time.

Similarly, it will be seen that in a multi-processor neural network processing apparatus such as shown in Figure 2, the availability of a number of duplicate clusters 92 and cores 30 enables some of these to be shut down or not relied upon when they are determined to be faulty or potentially faulty and for the apparatus to continue processing, albeit with less opportunity for opportunistic testing. As such, the system might be programmed to warn a user that a fault had been detected and for example, limit system functionality (speed, range or, for example, autonomous driving level) until the fault is repaired.

It will be appreciated that in certain systems, the tasks performed by each CNN 30 can be deterministically scheduled and so the host CPU 50 or the cluster CPUs may know a priori when they are to operate in redundant mode and accordingly when and where to expect configuration information for a target PCNN cluster or CNN to appear in system memory 99. Other systems may operate more asynchronously with the host CPU 50 allocating PCNN clusters 92 and/or CNNs to perform tasks on demand. In either case, it will be appreciated that PCNN clusters 92 or CNNs 30 can be configured to identify opportunities to operate in redundant mode so that the functionality of another PCNN cluster 92 or CNN 30 can be tested.

It will also be appreciated that in some embodiments, all of the PCNN clusters 92 or CNNs 30 could be configured to opportunistically test any other of the PCNN clusters 92 or CNNs 30, whereas in other embodiments, there may be a limited number or even a designated PCNN cluster 92 or CNN 30 which is configured with the ability to switch into redundant mode. This is course has the advantage of providing some spare computing capacity in the event that any given PCNN cluster 92 or CNN 30 is identified as being faulty and still allow the system to perform at fully capacity.

It should also be noted that there may be specific times when it can be beneficial to test the functionality of PCNN clusters 92 or CNNs 30, for example, when a vehicle is static and perhaps less demand is being made of the processing apparatus or perhaps not in very dark or low contrast conditions when image information being processed may be less useful for testing. In any case, it is not essential that testing would run continuously or at rigid intervals.

## Claims

1. A multi-processor neural network processing apparatus comprising:
a plurality of network processing engines (92',92"/30',30"), each for processing one or more layers of a neural network according to a network configuration;
a memory (99, 40') for at least temporarily storing: network configuration information for said network processing engines, said configuration information comprising program information and weights for one or more neural networks; and input image information for processing by one or more of said network processing engines, intermediate image information produced by said network processing engines and output information produced by said network processing engines when executing said one or more neural networks; and
a system bus (91) across which said plurality of network processing engines access said memory,
wherein at least one of said network processing engines (400) is configured, when otherwise idle, to identify configuration information and input image information to be processed by another target network processing engine and to use said configuration information and input image information to replicate the processing of the target network processing engine,
said apparatus being configured to compare at least one portion of information output by said target network processing engine with corresponding information generated by said one of said network processing engines to determine if at least one of said target network processing engine or said one of said network processing engines is operating correctly and, responsive to said comparison failing, to flag that said one of said network processing engines or said target network processing engine is potentially faulty.

2. An apparatus as claimed in claim 1 wherein each network processing engine comprises a cluster (92) of more than one individual network processing engine (30), each cluster comprising a common controller (200), said common controller being configured to identify said configuration information and input image information to be processed by another target network processing engine.

3. An apparatus according to claim 2 wherein said common controller for said one of said network processing engines is configured to compare said at least one portion of information output.

4. An apparatus as claimed in claim 1 further comprising a host controller (50) configured to designate a given network processing engine as said one of said network processing engines.

5. An apparatus as claimed in claim 1 further comprising a host controller (50) configured to compare said at least one portion of information output.

6. An apparatus as claimed in claim 1 wherein said one of said network processing engines is configured to identify configuration information and input image information to be processed by another target network processing engine either: in said memory or as said information is passed across the system bus.

7. An apparatus as claimed in claim 1 wherein said information output comprises any one or more of: intermediate image information produced by said network processing engines; output information produced by said network processing engines; and information derived from intermediate image information or output information.

8. An apparatus according to claim 7 wherein said output information comprises any combination of output classifications, output images or output maps.

9. An apparatus according to claim 1 wherein said input image information comprises any combination of visible image information; infra-red image information; thermal image information; or image maps derived from image acquisition device images.

10. An apparatus according to claim 1 wherein said network processing engines are configured to access information through a separate common shared memory (40').

11. A vehicle including an apparatus according to any previous claim and further comprising a communication network and a plurality of image capture devices arranged to acquire images from the vehicle environment and to write said images across said communication network into said apparatus memory for retrieval and processing by said apparatus.

## Patentansprüche

1. Einrichtung zum Verarbeiten eines neuronalen Netzes mit mehreren Prozessoren, umfassend:
mehrere Netzverarbeitungs-Engines (92', 92"/30', 30"), jeweils zum Verarbeiten einer oder mehrerer Schichten eines neuronalen Netzes gemäß einer Netzkonfiguration;
einen Speicher (99, 40') zum wenigstens temporären Speichern von:
Netzkonfigurationsinformationen für die Netzverarbeitungs-Engines, wobei die Konfigurationsinformationen Programminformationen und Gewichte für ein oder mehrere neuronale Netze umfassen; und Eingabebildinformationen zum Verarbeiten durch die Netzverarbeitungs-Engines, Zwischenbildinformationen, die durch die Netzverarbeitungs-Engines erzeugt werden, und/oder Ausgabeinformationen, die durch die Netzverarbeitungs-Engines beim Ausführen des einen oder der mehreren neuronalen Netze erzeugt werden; und
einen Systembus (91), über den die mehreren Netzverarbeitungs-Engines auf den Speicher zugreifen,
wobei wenigstens eine der Netzverarbeitungs-Engines (400) konfiguriert ist, bei sonstigem Leerlauf Konfigurationsinformationen und Eingabebildinformationen zu identifizieren, die durch eine andere Zielnetzverarbeitungs-Engine verarbeitet werden sollen, und die Konfigurationsinformationen und Eingabebildinformationen zu verwenden, um das Verarbeiten der Zielnetzverarbeitungs-Engine zu replizieren,
wobei die Einrichtung konfiguriert ist, um wenigstens einen Teil von Informationen, die durch die Zielnetzverarbeitungs-Engine ausgegeben werden, mit entsprechenden Informationen zu vergleichen, die durch die eine der Netzverarbeitungs-Engines erzeugt werden, um zu bestimmen, ob die Zielnetzverarbeitungs-Engine und/oder die eine der Netzverarbeitungs-Engines korrekt arbeitet, und um als Reaktion auf das Scheitern des Vergleichs zu markieren, dass die eine der Netzverarbeitungs-Engines oder die Zielnetzverarbeitungs-Engine potenziell fehlerhaft ist.

2. Einrichtung nach Anspruch 1, wobei jede Netzverarbeitungs-Engine einen Cluster (92) aus mehr als einer einzelnen Netzverarbeitungs-Engine (30) umfasst, wobei jeder Cluster eine gemeinsame Steuerung (200) umfasst, wobei die gemeinsame Steuerung konfiguriert ist, um die Konfigurationsinformationen und Eingabebildinformationen zu identifizieren, die durch eine andere Zielnetzverarbeitungs-Engine verarbeitet werden sollen.

3. Einrichtung nach Anspruch 2, wobei die gemeinsame Steuerung für die eine der Netzverarbeitungs-Engines konfiguriert ist, um den wenigstens einen Abschnitt der Informationsausgabe zu vergleichen.

4. Einrichtung nach Anspruch 1, die ferner eine Host-Steuerung (50) umfasst, die konfiguriert ist, um eine gegebene Netzverarbeitungs-Engine als die eine der Netzverarbeitungs-Engines zu bezeichnen.

5. Einrichtung nach Anspruch 1, die ferner eine Host-Steuerung (50) umfasst, die konfiguriert ist, um den wenigstens einen Abschnitt der Informationsausgabe zu vergleichen.

6. Einrichtung nach Anspruch 1, wobei die eine der Netzverarbeitungs-Engines konfiguriert ist, um Konfigurationsinformationen und Eingabebildinformationen zu identifizieren, die durch eine andere Zielnetzverarbeitungs-Engine verarbeitet werden sollen, entweder: in dem Speicher oder wenn die Informationen über den Systembus weitergeleitet werden.

7. Einrichtung nach Anspruch 1, wobei die Informationsausgabe umfasst:
Zwischenbildinformationen, die durch die Netzverarbeitungs-Engines erzeugt werden; Ausgabeinformationen, die durch die Netzverarbeitungs-Engines erzeugt werden; und/oder Informationen, die aus Zwischenbildinformationen oder Ausgabeinformationen abgeleitet werden.

8. Einrichtung nach Anspruch 7, wobei die Ausgabeinformationen eine beliebige Kombination von Ausgabeklassifikationen, Ausgabebildern oder Ausgabekarten umfassen.

9. Einrichtung nach Anspruch 1, wobei die Eingabebildinformationen eine beliebige Kombination von sichtbaren Bildinformationen; Infrarotbildinformationen; Wärmebildinformationen; oder Bildkarten, die aus Bildern von einer Bilderfassungsvorrichtung abgeleitet werden, umfassen.

10. Einrichtung nach Anspruch 1, wobei die Netzverarbeitungs-Engines konfiguriert sind, um auf Informationen über einen separaten, gemeinsam genutzten Speicher (40') zuzugreifen.

11. Fahrzeug, einschließlich einer Einrichtung nach einem der vorhergehenden Ansprüche und ferner umfassend ein Kommunikationsnetz und mehrere Bilderfassungsvorrichtungen, die angeordnet sind, um Bilder von der Fahrzeugumgebung zu erfassen und die Bilder über das Kommunikationsnetz in den Speicher der Einrichtung für einen Abruf und das Verarbeiten durch die Einrichtung zu schreiben.

## Revendications

1. Appareil de traitement de réseau neuronal multiprocesseur comprenant :
une pluralité de moteurs de traitement de réseau (92', 92"/30', 30"), chacun destiné à traiter une ou plusieurs couches d'un réseau neuronal selon une configuration de réseau ;
une mémoire (99, 40') destinée à stocker au moins temporairement :
des informations de configuration de réseau pour lesdits moteurs de traitement de réseau, lesdites informations de configuration comprenant des informations de programme et des poids pour un ou plusieurs réseaux neuronaux ; et des informations d'image d'entrée pour le traitement par un ou plusieurs desdits moteurs de traitement de réseau, des informations d'image intermédiaires produites par lesdits moteurs de traitement de réseau et des informations de sortie produites par lesdits moteurs de traitement de réseau lors de l'exécution desdits un ou plusieurs réseaux neuronaux ; et
un bus système (91) à travers lequel ladite pluralité de moteurs de traitement de réseau accède à ladite mémoire,
dans lequel au moins un desdits moteurs de traitement de réseau (400) est configuré, lorsqu'il est à défaut au repos, pour identifier les informations de configuration et les informations d'image d'entrée à traiter par un autre moteur de traitement de réseau cible et pour utiliser lesdites informations de configuration et les informations d'image d'entrée afin de répliquer le traitement du moteur de traitement de réseau cible,
ledit appareil étant configuré pour comparer au moins une partie des informations délivrées par ledit moteur de traitement de réseau cible avec les informations correspondantes générées par ledit un desdits moteurs de traitement de réseau pour déterminer si ledit moteur de traitement de réseau cible et/ou lesdits moteurs de traitement de réseau fonctionnent correctement et, en réponse à ladite comparaison échouant, pour signaler que ledit un desdits moteurs de traitement de réseau ou ledit moteur de traitement de réseau cible est potentiellement défectueux.

2. Appareil selon la revendication 1, dans lequel chaque moteur de traitement de réseau comprend une grappe (92) de plus d'un moteur de traitement de réseau individuel (30), chaque grappe comprenant un contrôleur commun (200), ledit contrôleur commun étant configuré pour identifier lesdites informations de configuration et des informations d'image d'entrée à traiter par un autre moteur de traitement de réseau cible.

3. Appareil selon la revendication 2, dans lequel ledit contrôleur commun pour ledit un desdits moteurs de traitement de réseau est configuré pour comparer ladite au moins une partie de la sortie d'informations.

4. Appareil selon la revendication 1, comprenant en outre un contrôleur hôte (50) configuré pour désigner un moteur de traitement de réseau donné comme ledit un desdits moteurs de traitement de réseau.

5. Appareil selon la revendication 1, comprenant en outre un contrôleur hôte (50) configuré pour comparer ladite au moins une partie de la sortie d'informations.

6. Appareil selon la revendication 1, dans lequel ledit un desdits moteurs de traitement de réseau est configuré pour identifier des informations de configuration et des informations d'image d'entrée à traiter par un autre moteur de traitement de réseau cible soit :
dans ladite mémoire ou lorsque lesdites informations sont transmises à travers le bus système.

7. Appareil selon la revendication 1, dans lequel ladite sortie d'informations comprend : des informations intermédiaires d'image produites par lesdits moteurs de traitement de réseau ; et/ou
des informations de sortie produites par lesdits moteurs de traitement de réseau ; et/ou des informations dérivées d'informations intermédiaires d'image ou d'informations de sortie.

8. Appareil selon la revendication 7, dans lequel lesdites informations de sortie comprennent toute combinaison de classifications de sortie, d'images de sortie ou de cartes de sortie.

9. Appareil selon la revendication 1, dans lequel lesdites informations d'image d'entrée comprennent toute combinaison d'informations d'image visible ; des informations d'image infrarouge ; des informations d'image thermique ; ou des cartes d'image dérivées d'images de dispositifs d'acquisition d'images.

10. Appareil selon la revendication 1, dans lequel lesdits moteurs de traitement de réseau sont configurés pour accéder aux informations par l'intermédiaire d'une mémoire partagée commune séparée (40').

11. Véhicule comportant un appareil selon l'une quelconque des revendications précédentes et comprenant en outre un réseau de communication et une pluralité de dispositifs de capture d'images agencés pour acquérir des images à partir de l'environnement du véhicule et pour écrire lesdites images à travers ledit réseau de communication dans ladite mémoire de l'appareil pour une récupération et un traitement par ledit appareil.
